# EUROPEAN PATENT SPECIFICATION

(11) **EP 1 343 068 B1**
(45) Date of publication and mention of the grant of the patent: **17.04.2019**
(21) Application number: 03000580.5
(22) Date of filing: 13.01.2003
(51) Int. Cl.: G06F 3/023, G06F 1/16, G06F 3/038

(54) **Electronic equipment including a touch pad and a method for controlling usage of the touch pad**
Elektronische Vorrichtung mit einem Touchpad und Verfahren zur Steuerung Anwendungen derselben
Equipement électronique comportant un système de pavé tactile et procédé de contrôle de l'usage du pavé tactile

(30) Priority: 16.01.2002 JP 2002006841
(43) Date of publication of application: 10.09.2003
(60) Divisional application: 17183392.4
(73) Proprietor: Toshiba Client Solutions Co., Ltd., Tokyo 135-8505 (JP)
(72) Inventor: Kojo, Akihiro, Toshiba Corporation, Minato-ku, Tokyo (JP); Yamazaki, Hiroshi, Toshiba Corporation, Minato-ku, Tokyo (JP)
(74) Representative: Henkel, Breuer & Partner

(56) References cited:
- FR-A- 2 772 945
- JP-A- 10 133 796
- JP-A- 2001 306 246
- JP-B2- 3 243 423
- US-A1- 2001 030 641
- US-A1- 2001 055 195
- "AUXILIARY DEVICE CONNECTOR FOR NOTEBOOK PC" 1 March 1993 (1993-03-01), IBM TECHNICAL DISCLOSURE BULLETIN, IBM CORP. NEW YORK, US, PAGE(S) 539-540 , XP000354871 ISSN: 0018-8689 * the whole document *
- "ISO 9241-13:1998 Ergonomic requirements for office work with visual display terminals (VDTs) -- Part 13: User guidance", INTERNATIONAL STANDARD - ISO, ZUERICH, CH, vol. 9241-13, 15 July 1998 (1998-07-15), page 32pp, XP001525163,

## Description

### FIELD OF THE INVENTION

The present invention relates to electronic equipment that includes a pointing means and to a method for controlling the pointing means. More particularly, embodiments consistent with the present invention relate to a personal computer including a pointing means, such as a touch pad and to a method for controlling the input from the pointing means by a special key.

### BACKGROUND OF THE INVENTION

Conventionally, electronic equipment, such as personal computers include a keyboard unit as an input device. Usually, auxiliary input means, such as mouse, track ball, and touch pad stick pointing device, is used together with the keyboard unit in order to move indicators, such as a cursor or an icon displayed on a screen in a display unit and to perform operations, such as a selection or an execution by clicking or double clicking the pointing device.

In recent years, touch pad unit is widely used as a pointing device for a personal computer due to its operability. The touch pad can easily move a displayed pointer on a screen for a personal computer by moving a finger of a user in a wanting direction to move the pointer with touching a surface of the pad.

Usually, touch pad is positioned in an armrest portion of a main body of a personal computer, i.e., in front of keyboard unit unit of the personal computer. Accordingly, it easily happens to accidentally touch a hand of user on the pad surface during key input operations. By the accidental touch, a cursor may easily move in an unintended direction.

In order to prevent the unintended movement of the cursor from occurring, various techniques for prohibiting input operation from a touch pad by using utility software have been proposed. For example, Japanese Application Publication 10-133796, published May 22, 1998, discloses a technique for allowing the input operation from the touch pad only when no key input operation is detected during a predetermined time interval. However, this technique has a problem that a pointer will move due to the static electricity of a human body without touching the pad, if no key input status continues for a predetermined interval.

Further, Japanese Application Publication 2001-306246, published November 2, 2001, discloses a technique for providing a special button in a portion of the touch pad for switching validity and invalidity of the input signal from a touch pad. However, this technique also has a problem that a user must touch the special button even when a usual pad operation since the button has another function for instructing permission or prohibition of a signal input into the button unit which determines the touch pad operation. This technique has another problem that a careless input operation from the button will be accomplished since the switching of the permission and prohibition are performed by a stroke of the button part. US 2001 030641 A1, JP 10 133796 A1, ISO 9241-13: 1998 Ergonomic requirements for office work with visual display terminals (VDTs) - Part 13: User guidance, INTERNATIONAL STANDARD - ISO - ZUERICH, CH, vol. 9241-13, JP 3 243423 A1 and US2001 0055195 A1 disclose further background state of the art.

### SUMMARY OF THE INVENTION

The present invention intends to solve the above-mentioned problems. Accordingly, the present invention provides electronic equipment that can prevent the unintended input operation by the touch pad during a normal keyboard unit input operation. Also the electronic equipment consistent with the present invention can recognize as to the usability of the touch pad. Thus, the present invention provides electronic equipment and a method for controlling a pointing means that can prevent the touch pad from unintentionally inputting touch pad. The above object is achieved by an electronic equipment according to claim 1. The dependent claim is directed to further advantageous aspects of the invention.

### BRIEF DESCRIPTION OF THE DRAWINGS

The accompanying drawings, which are incorporated in and constitute part of this specification, illustrate various embodiments and/or features of the invention and together with the description, serve to explain the invention. Wherever possible, the same reference numbers will be used throughout the drawings to the same or like parts. In the drawings:
Figure 1 is a perspective view of an exemplary configuration for a personal computer in which methods and apparatus consistent with the present invention may be implemented.
Figure 2 is a functional block diagram of an exemplary circuit diagram for a personal computer in which methods and apparatus consistent with the present invention may be implemented.
Figure 3 is a detail functional block diagram of an exemplary circuit diagram for circuit configuration around the EC illustrated in Figure 2.
Figure 4 is a flowchart explaining a method for controlling touch pad consistent with the present invention.
Figure 5 is a perspective view of another exemplary configuration for a personal computer in which methods and apparatus consistent with the present invention may be implemented.
Figure 6 is a functional block diagram of an exemplary circuit diagram for a personal computer illustrated in Figure 5 in which methods and apparatus consistent with the present invention may be implemented.

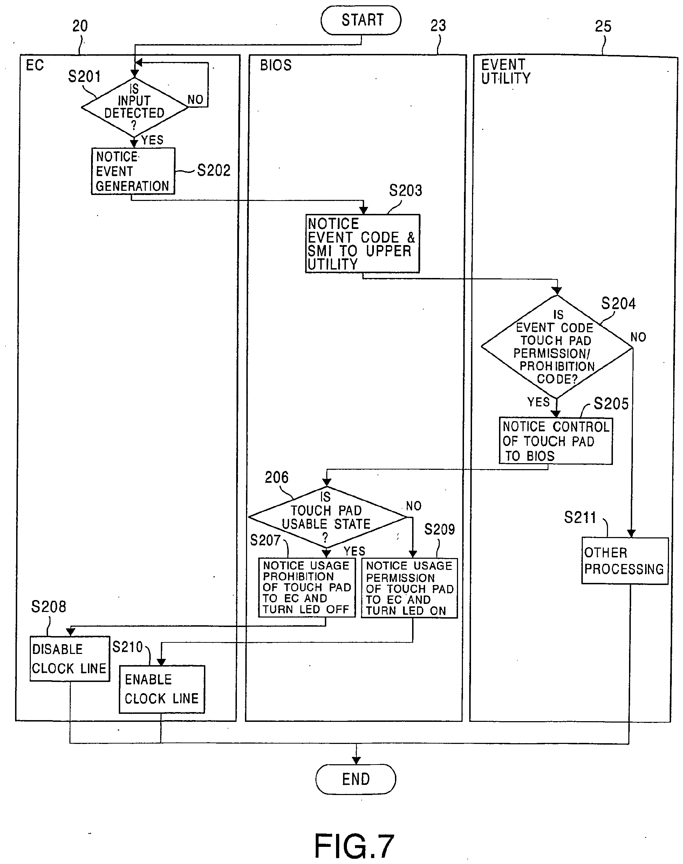

Figure 7 is a flowchart explaining a method for controlling touch pad consistent with the present invention.

### DETAILED DESCRIPTION

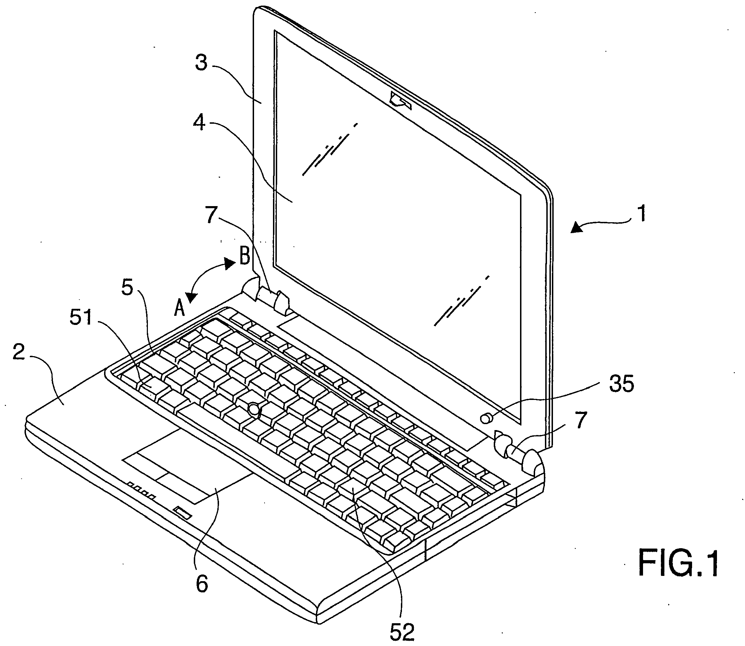

Reference will now be made in detail to the exemplary embodiments of the invention, examples of which are illustrated in the accompanying drawings. Wherever possible, the same reference numbers will be used throughout the drawings to refer the same or like parts. Figure 1 illustrates a personal computer 10 as electronic equipment consistent with the invention. The personal computer 1 includes a main unit body 2 and a display unit body 3. The display unit body 3 holds a screen display 4, such as an LCD panel, so that a displaying area is visible. A keyboard unit 5 is provided on an upper surface of the main unit body 2. One elongated side edge of the display unit body 3 is coupled to one elongated side edge of the main unit body 2 through hinge units 7. Thus, the display unit body 3 rotatably moves through the hinge 7 along A-B arrow directions to and from a display open position and a display closed position. Further, a touch pad 6 as a pointing device is provided in an armrest area, i.e., a front area of the keyboard unit 5 on the upper surface of the main unit body 2. When the display unit body 3 is closed, it covers the upper surface of the main unit body 2 to protect the keyboard unit 5 and the touch pad 6.

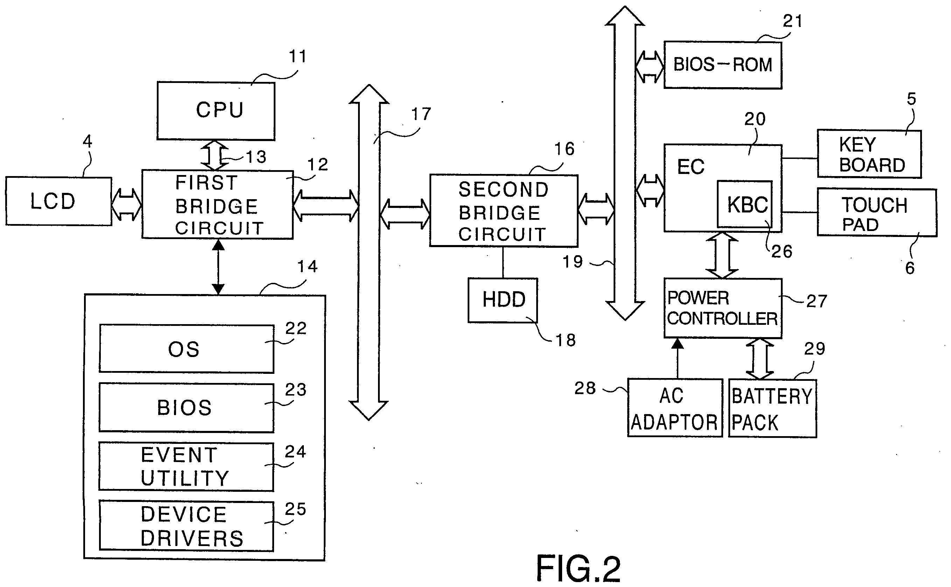

In general, operation of the personal computer is accomplished by electronic components located within the main unit body 2. For example, as illustrated in Figure 2, the main unit body 2 of the personal computer 1 includes a CPU 11 for controlling operational execution and data processing of the computer 1; a main memory 14 for storing for example, an Operating System (OS) 22, a BIOS 23, event utility software 24, various device drivers 25, and processed data; a display controller for the LCD panel 4; an HDD 18 as a storing/reproducing apparatus for data; and an embedded controller (EC) 20 for installing a plurality of register groups which may be read/written by the CPU 11. The main memory 14 includes, for example, a plurality of, such as, dynamic random access memories (DRAM).

OS 22 controls total operations of the hardware and the software in the personal computer 1. Also, OS 22 controls the utility right, such as an interrupting operation by the CPU 11. BIOS 23 stores systematized functional execution routines for accessing various devices in the personal computer1. When personal computer 1 is generated, BIOS programs are read out from a BIOS-ROM 21 through the first and the second bridge circuits. Further, BIOS 23 stores a setup for saving the power supply to control drives for various devices. The event utility software 24 performs control instructions to BIOS 23 for executing a suitable process, such as an interruption, in accordance with an event generation from various devices.

The CPU 11 and the main memory 14 are respectively connected to a first bridge circuit 12 through a CPU local bus 13. The CPU local bus 13 includes a data bus of 64 bits in width. Usually, the first bridge circuit 12 and the main memory 14 are coupled using a memory bus. However, the CPU local bus 13 is used in the presently illustrated. Further, a display controller 15 is also connected to the first bridge circuit 12 through a data bus. Usually, the first bridge circuit 12 and the main memory 14 are coupled using a memory bus. However, the CPU local bus 13 is used in the presently illustrated embodiment. Further the LCD panel 4 is coupled to the first bridge circuit 12 through a display controller (not shown).

In the main unit body 2, the first bridge circuit 12 is coupled to a second bridge circuit 16 through a first bus 17. The first bus 17 includes a data bus of 32 bits in width. The hard disk drive (HDD) 18 is connected to the second bridge circuit 16. Further, the embedded controller (EC) 20 and a BIOS-ROM 21 are coupled to the second bridge circuit 16 through a second bus 19. The second bus 19 includes a data bus of 16 bits in width.

The first bridge circuit 12 is a bridge LSI for coupling between the CPU local bus 13 and the first bus 17, and it functions as one of the bus master devices for the first bus 17. The first bridge circuit 12 performs various functions, such as a function for converting bus width including data and addresses between the CPU local bus 13 and the first bus 17, and a function for controlling the main memory 14 through a memory bus. Further, the first bridge circuit 12 may function as a display controller for transmitting display data to the LCD panel 4 coupled through the first bridge circuit 12. The first bus 17 is a clock synchronization type input/output bus. Thus, whole cycles on the first bus 17 synchronize with a first bus clock. The first bus 17 further includes a time divisionally used address/data bus.

The second bridge circuit 16 is a bridge LSI for coupling between the first bus 17 and the second bus 19 in order to perform bus conversion between the first bus 17 and the second bus 19. Further, the second bridge circuit 16 installs an intelligent drive electronics device (IDE) controller for controlling the HDD 18 that is connected to the second bridge circuit 16 for using as a data storage/reproduction device. The second bridge circuit 16 is coupled to the EC 20 and the BIOS-ROM 21 through the second bus 19.

The EC 20 installs a plurality of register groups that may be read/written by CPU 11. By using these register groups, it is possible to communicate between the CPU 11 and the EC 20. The EC 20 may further function as a keyboard unit controller (KBC) 26. Further the EC 20 couples to a power controller 27 The power controller 27 is coupled to an AC adaptor 28 for driving the personal computer 1 by supplying a commercial power source. Thus, the AC adaptor 28 is connected to the commercial power source. Further, the power controller 27 controls ON/OFF operation of power source for the personal computer 1. Also, the power controller 27 controls charging operation for a battery pack 29 as a secondary power for supplying power when the primary power supplied through the AC adaptor 28 shut down. Further, EC 20 is connected to the input interfaces, i.e., a keyboard unit 5 and a touch pad 6, respectively. The input signals through the keyboard unit 5 or the touch pad 6 are converted by the KBC 26 for processing by the devices in the computer.

The BIOS-ROM 21 stores system programs of functional routines for accessing various devices provided in the personal computer 1. When the personal computer 1 is starting up, the BIOS program is read out. Generally, the BIOS program is stored in a non-volatile memory, such as a flash ROM, in the personal computer 1.

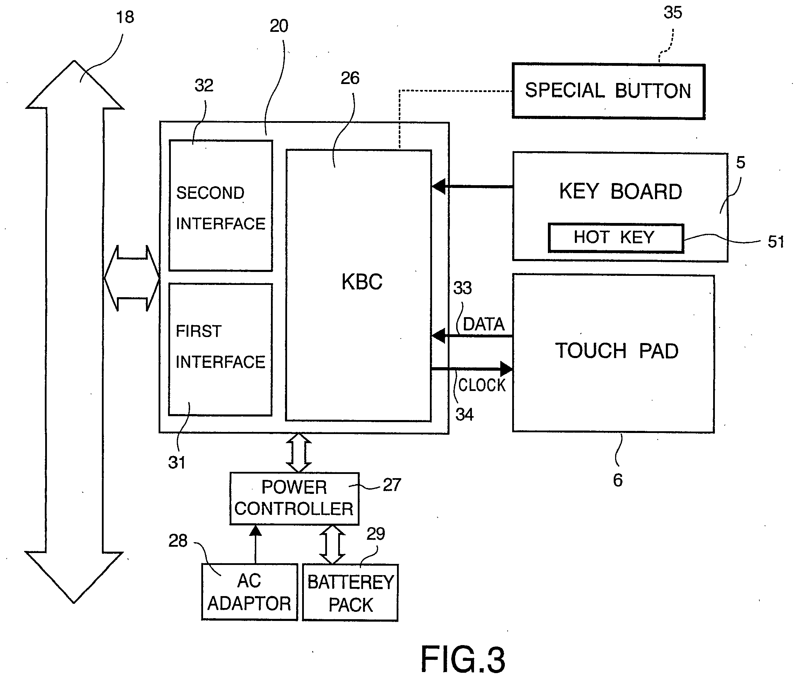

Electronic equipment consistent with the present invention, as illustrated in Figure 3, the EC 20 includes a first interface 31 and a second interface 32 that are respectively coupled to the second bus 19. The touch pad 6 connected to the EC 20 is physically connected the Personal System/2 (PS/2) through a data line 33 and a clock line 34. The first interface 31 is used by PS/2 drivers that include a touch pad driver.

According to this embodiment consistent with the present invention, the second interface 32 is provided as an exclusive access interface for the BIOS 23. Thus, the second interface 32 is an exclusive interface used for performing the control from BIOS 23. By providing such an exclusive access interface, it becomes possible to avoid a conflict between BIOS 23 and PS/2 device drivers. On the contrary, the conventional personal computer includes only one access interface. Consequently, if a conflict has occurred BIOS 23 and PS/2 device drivers, it has needed to re-start the computer. According to the personal computer consistent with the present invention, it becomes possible to perform a switching operation of a usage permission/prohibition of the touch pad 6. Consequently, it does not need to restart the personal computer 1 even when such a conflict between BIOS 23 and PS/2 device drivers has occurred.

To instruct such a usage of permission/prohibition of the touch pad 6, it is also possible, as illustrated in Figure 3, to provide a special button 35 for instructing to switch the permission/prohibition of the touch pad 6. According to the embodiments consistent with the present invention, in order to perform the usage control operation of the permission/prohibition for the touch pad 6, a user pushes down a particular key, such as a function (F) key 51 or a question (?) key 52 (hereinafter referred to as a "hot key") that is provided in the keyboard unit 5 or the main unit body 2. Further, it is also possible to perform the usage control operation of the permission/prohibition for the touch pad 6 by pushing down the special button 35 that may be provided on the display unit body 3.

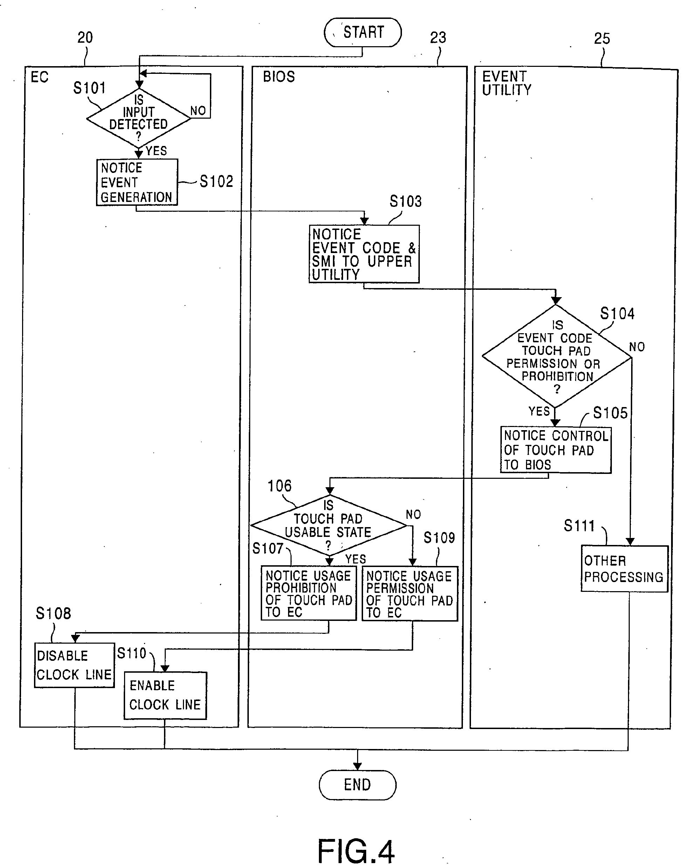

With reference to the flowchart illustrated in Figure 4, how to control of the usage of the permission/prohibition of the touch pad 6 is explained. When an input from the hot key 51 provided in the keyboard unit 5 or the special button 35 provided on the display unit body 3 is detected (step S101, YES), the EC 20 generates an interruption signal in order to inform an occurrence of an event of the pushing-down of such the special key 35 to the BIOS 23 (step S102).

When the interruption from the EC 20 is detected, the BIOS 23 notices the event code and the system management interrupt (SMI) operation to an event utility 25 (step S103). The event utility 25 judges what event has occurred in accordance with the event code received from the BIOS 23. If the event utility 25 judges that the event code number is to instruct the permission/prohibition of the touch pad 6 due to a pushing-down operation of the hot key 51 or the special button 35 (step S104, YES), the event utility 25 sends an instruction to the BIOS 23 for performing the permission/prohibition control of the touch pad 6 (step S105).

When the permission/prohibition control of the touch pad 6 is received from the event utility 25, the BIOS 23 judges whether the touch pad 6 is now under a using state or not. If it is judged that the touch pad 6 is presently in a using state (step S106, YES), the BIOS 23 delivers an instruction for prohibiting the usage of the touch pad 6 to the exclusive-use second interface 32 in the EC 20 (step S107). When the second interface 32 receives the usage prohibition of the touch pad 6, the EC 20 makes the clock line 34 connected to the touch pad 6 disable in order to shift into an input prohibition status (step S108). To make the touch pad 6 disable, the signal status on the clock line 34 is made to a low state. By keeping the clock line 34 at the low state, input signal data 33 from the touch pad 6 are prohibited to input into the KBC 26.

If it is judged that the touch pad 6 is now in a non-use state (step S106, NO), the BIOS 23 delivers an instruction for permitting the usage of the touch pad 6 to the exclusive-use second interface 32 in the EC 20 (step S109). When the second interface 32 receives the usage permission of the touch pad 6, the EC 20 makes the clock line 34 enable in order to shift into an input permission status (step S110). To make the touch pad 6 enable, the signal status on the clock line 34 is released from the low state.

If the event utility 25 judges that the event code number does not instruct the permission/prohibition of the touch pad 6 (step S104, NO), the event utility 25 performs other process in accordance with the event code (step S111). Since the other process is not essential for the operation of the personal computer consistent with the present invention, the detail explanations are omitted.

As explained above, this embodiment, which is consistent with the present invention, changes the clock line 34 between the enable and the disable to permit or prohibit the input operation from the touch pad 6. It is also possible to directly instruct the change of the touch pad 6 from the BIOS 23. Thus, if usage of the touch pad 6 is prohibited, the input signals from the touch pad 6 are destroyed in the EC 20 in order to prevent the upper devices from transmitting the data.

This embodiment, which is consistent with the present invention, can change the usage permission/prohibition of the touch pad 6 by pushing down the hot key 51 or the special button 37. It is further possible to change the usage permission/prohibition of the touch pad 6 by using a graphical user interface (GUI) button displayed on the screen panel 4. The GUI button is displayed by software. It becomes possible to switch the permission/prohibition of the touch pad 6 by pushing or clicking the displayed GUI button.

Thus, according to this embodiment consistent with the present invention, it becomes possible to avoid conflicts among various drivers by providing an exclusive-use second interface 32 for the interface touch pad 6 in the EC 20. Consequently, it becomes possible to switch into an status for prohibiting unintended inputs from the touch pad 6 without restarting operation of the equipment.

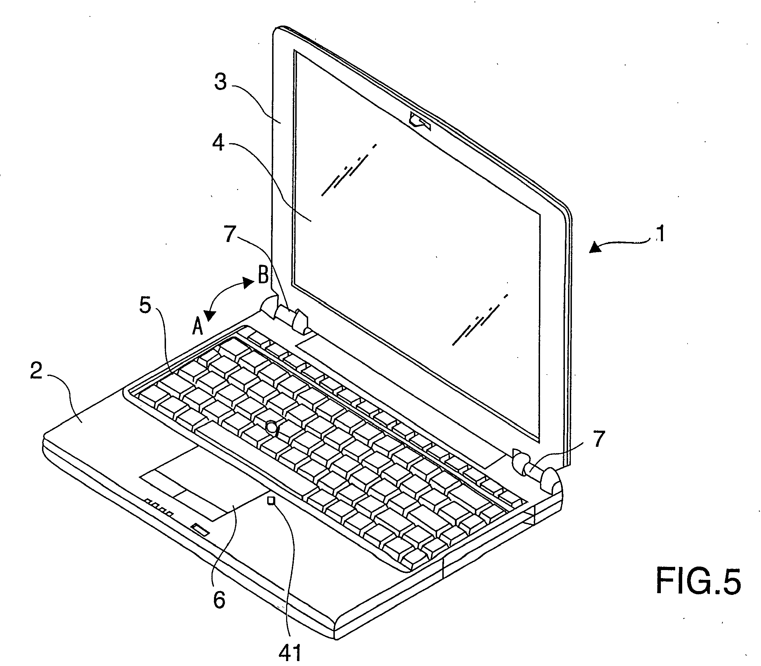

Figure 5 illustrates an example useful to understand the invention. With reference to Figure 5, a personal computer 1 includes a main unit body 2 and a display unit body 3 that holds an LCD panel 4. The display unit body 3 rotatably moves through the hinge 7 along A-B arrow directions to and from a display open position and a display closed position. A keyboard unit 5 is provided on an upper surface of the main unit body 2. Further, a touch pad 6 as a pointing device is provided in a front area of the keyboard unit 5 on the upper surface of the main unit body 2.

Further, according to this example, a discrimination unit 41, such as an light emitting diode (LED), is provided in order to notify a prohibition status of the touch pad 6 to a user. The discrimination unit 41 is provided at a position that goes into a user's view during operation of the touch pad 6. For example, in Figure 5, LED 41 is provided near to the touch pad 6 on an arm pad area of the upper surface of the main unit body 2.

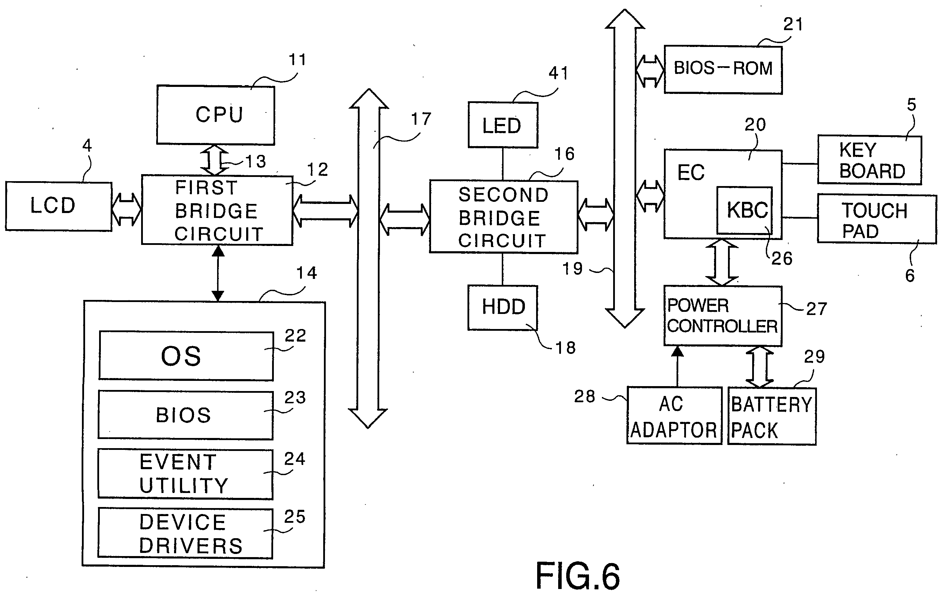

As illustrated in Figure 6, the discrimination unit (LED) 41 is connected to a second bridge circuit 16. Thus, the second bridge circuit 16 couples between a first bus 17 and a second bus 19 in order to perform bus conversion between the first bus 17 and the second bus 19. Further, the second bridge circuit 16 installs an IDE controller for controlling a HDD 18 that is connected to the second bridge circuit 16 as a data storage/reproduction device. The second bridge circuit 16 is coupled to a EC 20 and a BIOS-ROM 21 through the second bus 19.

The EC 20 may function as a keyboard unit controller (KBC) 26. Further the EC 20 is connected to input interfaces, such as, a keyboard unit 5 and a touch pad 6, respectively. The input signals through the keyboard unit 5 or the touch pad 6 are converted by the KBC 26 for processing by the devices in the computer.

A CPU 11 and a main memory 14 are respectively connected to a first bridge circuit 12 through a CPU local bus 13. Further, a display controller 15 is also connected to the first bridge circuit 12 through a data bus. Further the LCD panel 4 is coupled to the first bridge circuit 12 through a display controller (not shown). In the main unit body 2, the first bridge circuit 12 is coupled to a second bridge circuit 16 through a first bus 17. An EC 20 and a BIOS-ROM 21 are coupled to the second bridge circuit 16 through a second bus 19. The first bridge circuit 12 functions as one of the bus master devices for the first bus 17. The first bridge circuit 12 performs various functions, such as a function for converting bus width including data and addresses between the CPU local bus 13 and the first bus 17, and a function for controlling the main memory 14 through a memory bus. Further, the first bridge circuit 12 may function as a display controller for transmitting display data to the LCD panel 4 coupled through the first bridge circuit 12. The first bus 17 is a clock synchronization type input/output bus. Thus, whole cycles on the first bus 17 synchronize with a first bus clock.

Figure 6 explains the permission/prohibition control process of the touch pad 6. As similar to Figure 4, when an input from the hot key 51 provided in the keyboard unit 5 or the special button 35 provided on the display unit body 3 is detected (step S201, YES), the EC 20 generates an interruption signal in order to inform an occurrence of an event of the pushing-down of such the special key 35 to the BIOS 23 (step S202). When the interruption from the EC 20 is detected, the BIOS 23 notices the event code and the SMI operation to an event utility 25 (step S203). The event utility 25 judges what event has occurred in accordance with the event code received from the BIOS 23. If the event utility 25 judges that the event code number is to instruct the permission/prohibition of the touch pad 6 due to a pushing-down operation of the hot key 51 or the special button 35 (step S204, YES), the event utility 25 sends an instruction to the BIOS 23 for performing the permission/prohibition control of the touch pad 6 (step S205).

When the permission/prohibition control of the touch pad 6 is received from the event utility 25, the BIOS 23 judges whether the touch pad 6 is now under a using state or not. If it is judged that the touch pad 6 is presently in a using state (step S206, YES), the BIOS 23 delivers an instruction for prohibiting the usage of the touch pad 6 to the exclusive-use second interface 32 in the EC 20 and also delivers an instruction to turn the discrimination unit (LED) 41 off (step S207). When the second interface in the EC 20 receives the usage prohibition of the touch pad 6, the EC 20 makes the clock line connected to the touch pad 6 disable in order to shift into an input prohibition status (step S208). By keeping the clock line connecting between the KBC 26 and the touch pad 6 at a low state, input signal data 33 from the touch pad 6 are prohibited to input into the KBC 23.

If it is judged that the touch pad 6 is now in a non-use state (step S206, NO), the BIOS 23 delivers an instruction for permitting the usage of the touch pad 6 to the exclusive-use second interface in the EC 20 and also delivers an instruction to turn the discrimination unit (LED) 41 on (step S209). When the second interface receives the usage permission of the touch pad 6, the EC 20 makes the clock line 34 enable in order to shift into an input permission status (step S210). To make the touch pad 6 enable, the signal status on the clock line connecting between the KBC 26 and the touch pad 6 is released from the low state.

As explained above, according to this example, a user can recognize the permission/prohibition status of the touch pad 6 by viewing the LED 41. Thus, it becomes possible to visually judge whether the touch pad can be used at a present time without confusing a user.

Of course, it is possible to construct as a discrimination unit 41 other than by providing the LED. In the main embodiment a portion of the touch panel is constituted by a half- translucent material and to provide a luminescence unit of two or more colors underneath the half-translucent portion of the touch panel. Thus, the touch panel portion is lighted up by a different color from the under surface, a user can visually recognize the permission/prohibition status of the touch panel dependent with the lighted color.

Further, it is possible to store the permission/prohibition information of the touch pad usage into the BIOS-ROM 21 in order to succeed the information on touch pad that can be used when the personal computer is re-started.

Thus, according to the present invention, it becomes possible for a user to set the input permission/prohibition state for the touch pad by switching a hot key. Also it becomes possible to visually recognize the input permission/prohibition state for the touch pad by light up a portion of the touch pad with a different color.

As explained above, the described electronic equipment and method for switching the input permission/prohibition state of the touch pad may reduce confusion of input operation from the touch pad. Thus, embodiments consistent with the present invention provide electronic equipment with a higher operability of data input and pointing operations.

Other embodiments of the invention will be apparent to those skilled in the art from consideration of the specification and practice of the invention disclosed herein.

## Claims

1. An electronic equipment, comprising:
a main unit body (2) including various devices including a key board unit (5) for operating the electronic equipment, the key board unit (5) including a plurality of push-down keys for inputting character sequences and a particular key (35, 51, 52);
a display unit body (3) rotatably coupled to the main unit body (2) for providing a screen, the screen displaying a pointer;
a touch pad (6) provided on an upper surface of the main unit body (2) in front of the key board unit (5) for operating the pointer displayed on the screen;
instructing means (20, 25) configured to determine a permission and a prohibition of an input operation from the touch pad (6), when an input from the particular key (35, 51, 52) is detected;
switching means (11) configured to change between an operation state and a non-operation state for the touch pad (6) in accordance with the determination of the instruction means (20, 25); and
indicating means (41) configured to visually discriminate when input from the touch pad (6) is permitted;
**characterised in that** the touch pad (6) comprises a half-translucent portion constructed of a half-translucent material, and
a luminescence unit of two or more colors is provided underneath the half-translucent portion of the touch pad (6), thus that the half-translucent portion can be lighted up by different colors from the under surface, depending on the operation/non-operation state of the touch pad (6).

2. The electronic equipment according to claim 1, wherein the particular key is a hot key (51).

## Patentansprüche

1. Elektronische Ausrüstung mit:
einem Haupteinheitskörper (2) mit mehreren Vorrichtungen, einschließlich einer Tastatureinheit (5) zum Betätigen der elektronischen Ausrüstung, wobei die Tastatureinheit (5) eine Mehrzahl von Push-Down-Tasten zum Eingeben von Zeichenfolgen und einen besonderen Schlüssel (35, 51,52) enthält;
einem Darstellungseinheitskörper (3), der drehbar mit dem Haupteinheitskörper (2) verbunden ist, um einen Schirm bereitzustellen, wobei der Schirm einen Zeiger anzeigt;
einem berührungsempfindlichen Feld (6), das an einer oberen Oberfläche des Haupteinheitskörpers (2) vor der Tastatureinheit (5) vorgesehen ist, um den auf dem Schirm dargestellten Zeiger zu betätigen;
einem Anweisungsmittel (20, 25), das ausgestaltet ist, um ein Erlauben und ein Verbieten von einem Eingabebetrieb von dem berührungsempfindlichen Feld (6) zu bestimmen, wenn eine Eingabe von der besonderen Taste (35, 51, 52) erfasst wird;
einem Umschaltmittel (11), das ausgestaltet ist, um zwischen einem Betriebszustand und einem Nichtbetriebszustand des berührungsempfindlichen Felds (6) in Übereinstimmung mit der Bestimmung des Anweisungsmittels (20, 25) zu wechseln;
einem Anzeigemittel (41), das ausgestaltet ist, um visuell zu unterscheiden, wenn die Eingabe durch das berührungsempfindliche Feld (6) erlaubt ist;
**dadurch gekennzeichnet, dass**:
das berührungsempfindliche Feld (6) einen halbdurchsichtigen Abschnitt aufweist, der aus einem halbdurchsichtigen Material gebildet ist; und
eine Beleuchtungseinheit mit zwei oder mehr Farben unterhalb des halbdurchsichtigen Abschnitts des berührungsempfindlichen Felds (6) vorgesehen ist, so dass in Abhängigkeit von dem Betrieb/Nichtbetriebszustand des berührungsempfindlichen Felds (6) der halbdurchsichtige Abschnitt durch unterschiedliche Farben von der unteren Oberfläche beleuchtet werden kann.

2. Elektronische Ausrüstung nach Anspruch 1, bei der die besondere Taste ein Hotkey (51) ist.

## Revendications

1. Équipement électronique, comprenant :
un corps d'unité principale (2) incluant divers dispositifs incluant une unité de clavier (5) pour faire fonctionner l'équipement électronique, l'unité de clavier (5) incluant une pluralité de touches à pousser pour entrer des séquences de caractères et une touche particulière (35, 51, 52) ;
un corps d'unité d'affichage (3) couplé en rotation contre le corps d'unité principale (2) pour fournir un écran, l'écran affichant un pointeur ;
un pavé tactile (6) prévu sur une surface supérieure du corps d'unité principale (2) devant l'unité de clavier (5) pour faire fonctionner le pointeur affiché sur l'écran ;
un moyen d'instruction (20, 25) configuré pour déterminer une autorisation et une interdiction d'une opération d'entrée depuis le pavé tactile (6), lorsqu'une entrée depuis la touche particulière (35, 51, 52) est détectée ;
un moyen de commutation (11) configuré pour passer d'un état de fonctionnement à un état de non-fonctionnement pour le pavé tactile (6) en fonction de la détermination du moyen d'instruction (20, 25) ; et
un moyen d'indication (41) configuré pour discriminer visuellement lorsqu'une entrée du pavé tactile (6) est autorisée ;
**caractérisé en ce que**
le pavé tactile (6) comprend une partie semi-translucide fabriquée dans un matériau semi-translucide, et
une unité de luminescence de deux couleurs ou davantage est prévue en-dessous de la partie semi-translucide du pavé tactile (6), de sorte que la partie semi-translucide puisse être éclairée par des couleurs différentes depuis la sous surface, selon l'état de fonctionnement/non-fonctionnement du pavé tactile (6).

2. Équipement électronique selon la revendication 1, dans lequel la touche particulière est un raccourci clavier (51).
